# EUROPEAN PATENT APPLICATION

(11) **EP 2 540 878 A1**
(43) Date of publication of application: **02.01.2013**
(21) Application number: 12173784.5
(22) Date of filing: 27.06.2012
(51) Int. Cl.: D01F 9/127, D01F 9/133

(54) **Method and apparatus for producing carbon filament**

(30) Priority: 27.06.2011 IT TO20110562
(71) Applicant: Tecnocarbon ant S.r.l., 10121 Torino (IT)
(72) Inventor: Ansaldi, Roberto, 10026 Santena (Torino) (IT)
(74) Representative: Buzzi, Franco

(57) **Abstract**

A method for producing carbon filament starting from carbon nanotubes, comprising the steps of injecting in a controlled and dosed way three gaseous components, namely, hydrogen, carbon dioxide, and acetylene, and two liquid components, namely, ethanol and ferrocene, into a mixing chamber (5), introducing the mixture thus obtained into a thermal chamber in negative pressure (7) heating it to a temperature of between 1100°C and 1300°C to bring about molecular disgregation of the hydrocarbons present in the mixture and formation of the carbon nanotubes, which, once interwoven, form the carbon filament, and extracting and gathering the carbon filament at the outlet (8) of the thermal chamber (7).

## Description

### Field of the invention

The present invention relates to the production of carbon filament that is, for example, to be woven and pre-impregnated with resin for the production of composite products with high strength and low weight.

### Prior art

The production of carbon filament is currently obtained starting from polyacronitrile (PAN), an acronicrylic-based polymer obtained from the refinement of crude oil, through three thermal passes: oxidation at 350°C, heating at 2000°C in inert atmosphere, carbonization at 1500-1700°C. With said process filaments of graphene are obtained, which, joined together, form the carbon filament that is then woven and pre-impregnated with resin to obtain a workable product.

This conventional methodology presents a series of drawbacks, which can be summed up as follows:
- high production costs on account of the three thermal passes;
- raw material that is subject to the trends in the cost of crude oil;
- non-optimal degree of purity of the filament (percentage of carbon comprised between 94% and 98%);
- large-sized and high-cost plants; and
- high environmental impact.

There have also been proposed in the literature techniques for producing carbon filament through the generation of carbon nanotubes (CNTs) starting from carbon dioxide, which, however, do not seem to have so far achieved industrially advantageous results.

### Summary of the invention

The object of the invention is to provide a method for the production of carbon filament starting from carbon nanotubes (CNTs) that will overcome the drawbacks of the traditional methodologies of production, i.e., that will enable industrial production of carbon filament with a high degree of purity, with a single thermal pass and with the use of a mass-production apparatus that is relatively simple and inexpensive, and moreover with an appreciably lower environmental impact thanks to the practically total suppression of pollutant emissions.

The above purpose is achieved thanks to a method as defined in its most general terms in Claim 1 and to an apparatus as specified in Claim 5, as well as in the further claims subordinate to Claims 1 and 5.

In brief, the generation of carbon nanotubes from the interweaving of which the carbon filament is obtained envisages the injection of five components, namely, three gases (hydrogen, carbon dioxide, and acetylene) and two liquids (ethanol and ferrocene) into a mixing chamber, and subsequent heating of the mixture thus obtained in a thermal chamber in negative pressure, at a relatively low temperature, sufficient to bring about molecular disgregation of the hydrocarbons and generation of the nanotubes, which, under the effect of the catalyst constituted by ferrocene, interweave to form the carbon filament, which is then extracted from the thermal chamber and gathered outside.

The advantages deriving from the methodology according to the invention lie in the high purity of the carbon filament that can be obtained and in the limited consumption of energy deriving from a single thermal step at a relatively low temperature, with extremely reduced emissions and hence with an appreciably reduced environmental impact.

### Brief description of the drawings

The invention will now be described in detail with reference to the annexed drawings, which are provided purely by way of non-limiting example and in which:
- Figure 1 is a schematic perspective view of an apparatus for implementation of the method of production of carbon filament according to the invention;
- Figure 2 is a diagram that exemplifies the structural and functional components of the apparatus of Claim 1;
- Figure 3 is a top plan view of the injector of the apparatus;
- Figure 4 is a vertical cross-sectional view according to the line IV-IV of Figure 3;
- Figure 5 is a vertical cross-sectional view of the mixing chamber of the apparatus;
- Figure 6 is a partial vertical cross-sectional view of the thermal chamber of the apparatus according to the invention;
- Figure 7 is a view in side elevation of the diaphragm set at the outlet of the thermal chamber with the corresponding bushing for extraction of the carbon filament;
- Figure 8 is a vertical cross-sectional view according to the line VIII-VIII of Figure 7;

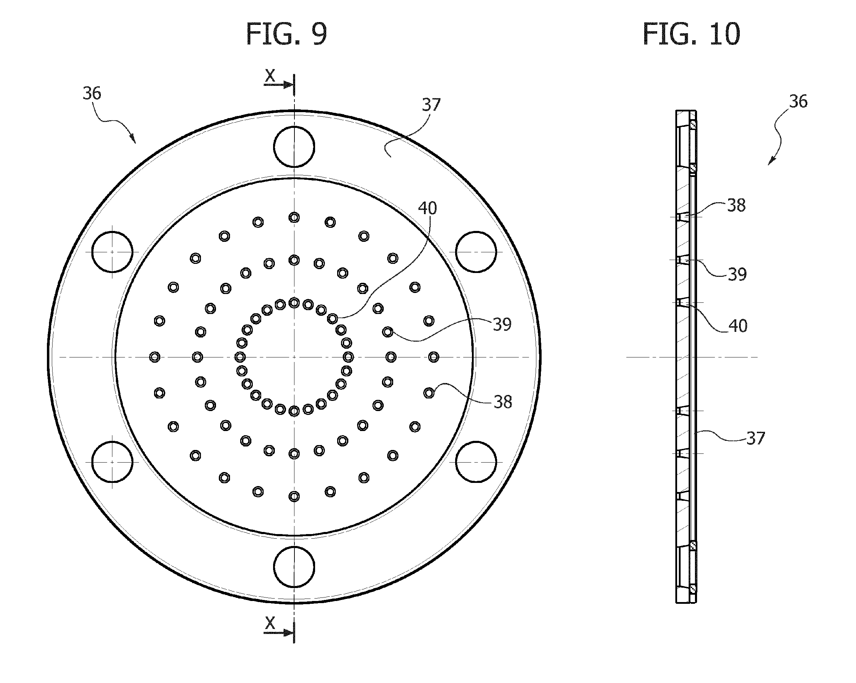

- Figure 9 is a top plan view of the plate applied to the diaphragm;
- Figure 10 is a cross-sectional view according to the line X-X of Figure 9;
- Figure 11 is a top plan view of the cleaning disk set at the outlet of the apparatus; and
- Figure 12 is a vertical cross-sectional view according to the line XII-XII of Figure 11.

### Detailed description of the invention

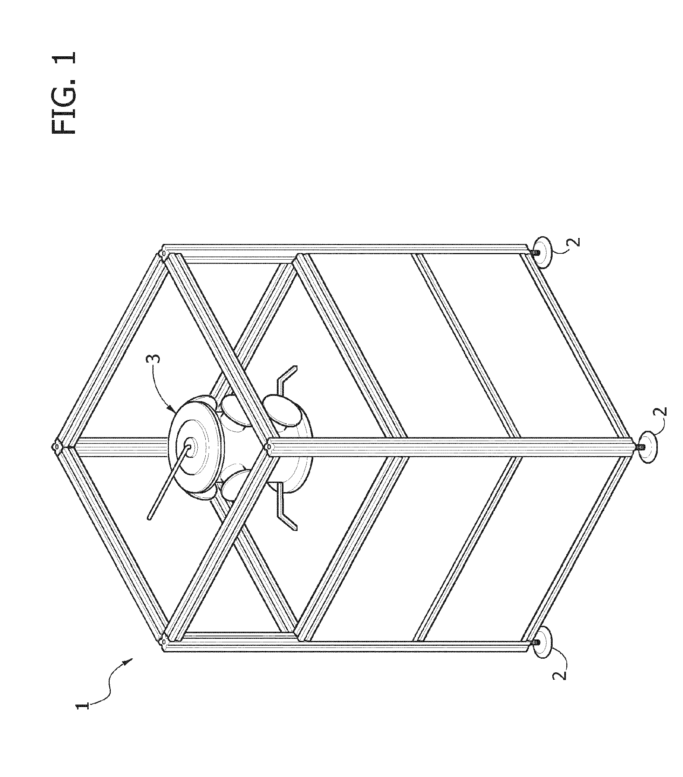

The example of embodiment represented schematically in Figure 1 of the apparatus for implementing the method of production of carbon filament according to the invention basically comprises a modular structure 1 provided at the bottom with adjustment and levelling feet 2 and bearing at the top an injection, mixing, and thermal-treatment unit, designated as a whole by 3, associated to which are actuation and control apparatuses, specified more fully in what follows.

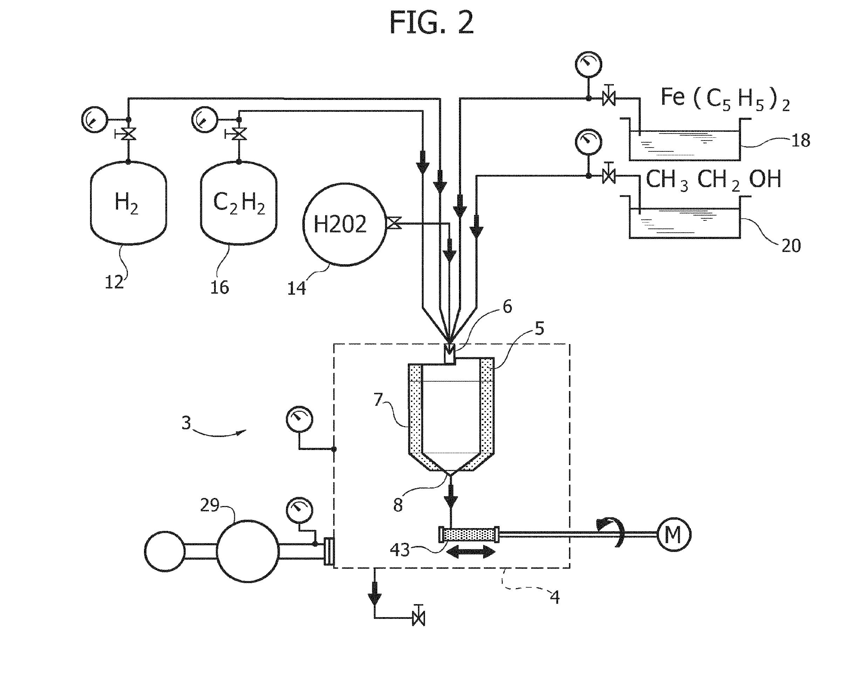

The diagram of Figure 2 exemplifies the components of the unit 3: set in a container 4 is a mixing chamber 5 that communicates at the top with an injector 6 and at the bottom with a thermal chamber 7 provided at the bottom with an outlet diaphragm 8.

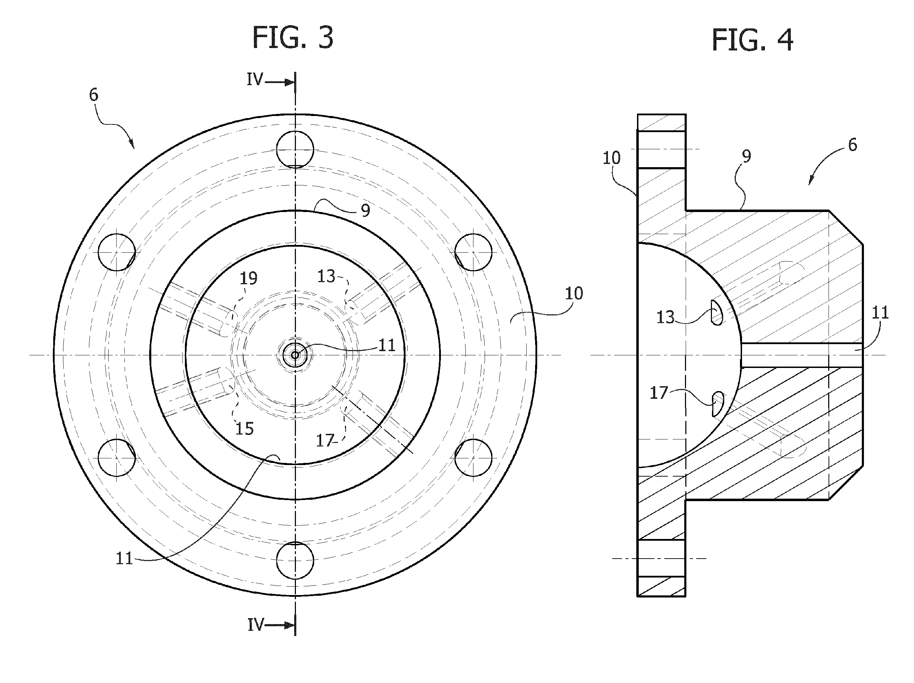

The injector 6, represented in detail in Figures 3 and 4, consists of a body 9 having a flange 10 for fixing to the top of the mixing chamber 5, and a plurality of channels for introduction of the components used in the method. In particular, the channels are five in number and are set according to a pre-ordered angle with respect to the axis of the body 9 and with respective angles of incidence of the injection defined for the purpose of optimizing mixing, and consequently the quality of the carbon filament that can be obtained with the method.

A first channel 11 is connected to a cylinder 12 (Figure 2) containing hydrogen, a second channel 13 is connected to a cylinder 14 containing carbon dioxide, a third channel 15 is connected to a cylinder 16 containing acetylene, a fourth channel 17 is connected to a tank 18 containing ferrocene, and a fifth channel 19 is connected to a tank 20 containing ethanol.

The injector 6 is hence configured for introducing into the mixing chamber 5 a mixture of three gases (H₂ - CO₂ - C₂H₂), fed at a low pressure, and two liquids (Fe (C₅H₅)₂ - CH₃CH₂OH) introduced at a high pressure. The nebulized mixture is then transferred to a common duct, at a controlled pressure via a microprocessor, and then introduced into the mixing chamber 5.

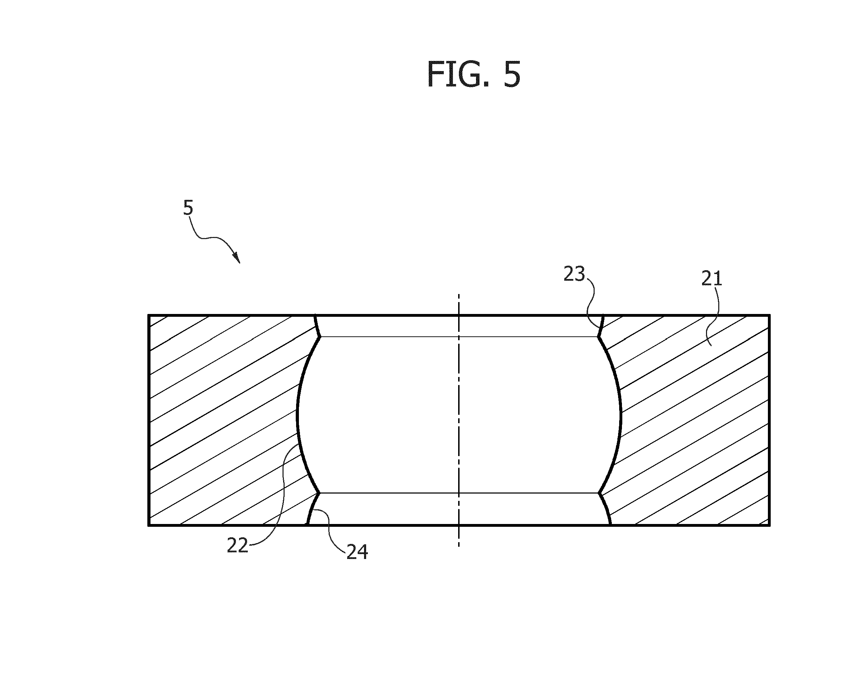

The times for entry, the pressures and the vol. percentages of the mixture are governed by the microprocessor, which is operatively connected to a series of sensors in such a way as to optimize and render uniform the mixture each time introduced into the chamber 5, represented in greater detail in Figure 5. It consists of an annular body 21 formed with a substantially barrel-shaped cavity 22, which communicates on one side with a generally conical portion 23 and on the other with a generally conical portion 24, which have different angles of conicity, respectively smaller and larger. It has been found experimentally that this configuration enables optimization of the uniformity of the mixture.

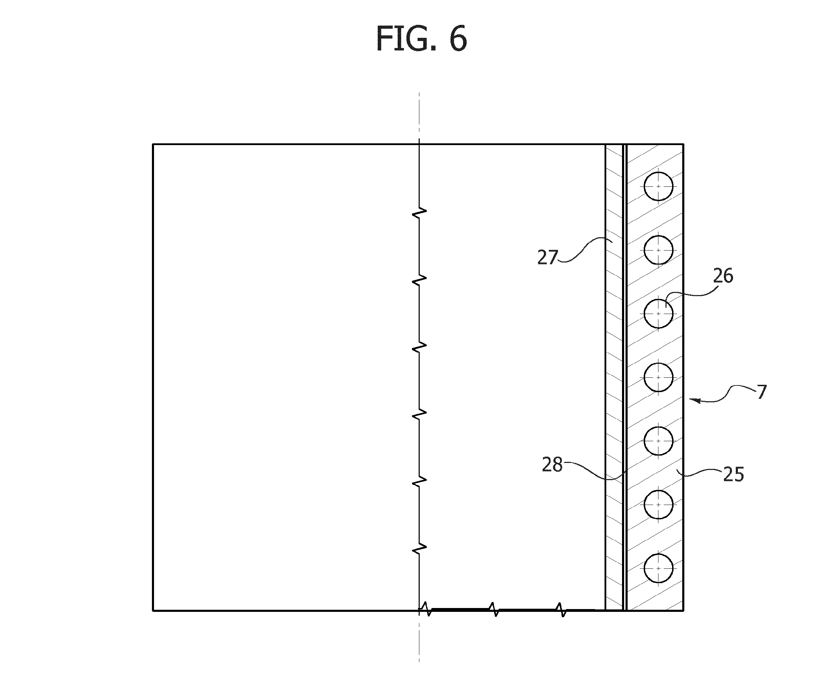

From the portion 24 of the mixing chamber 21 the mixture is then introduced, via a needle valve (not illustrated) into the thermal chamber 7 represented in Figure 6: it consists of a generally cylindrical body 25, which incorporates a heat exchanger 26 and the inner wall of which is coated with a lining of ceramic material 27, with the interposition of an adapter gasket 28.

A thermal source keeps the inside of the chamber 7 at a temperature generally of between 1100°C and 1300°C, and a vacuum source 29 (Figure 2) applies within the chamber 7 a negative pressure generally of 10⁻¹ torr.

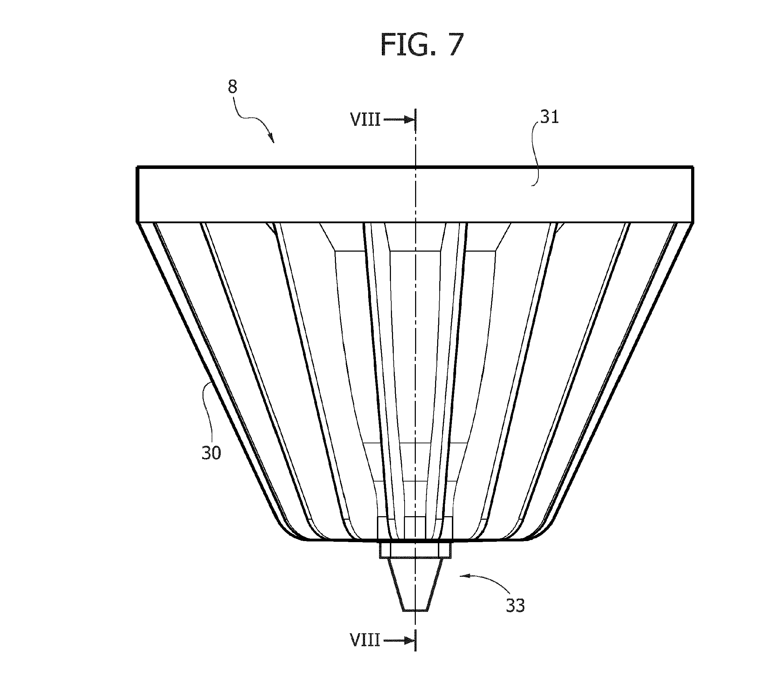

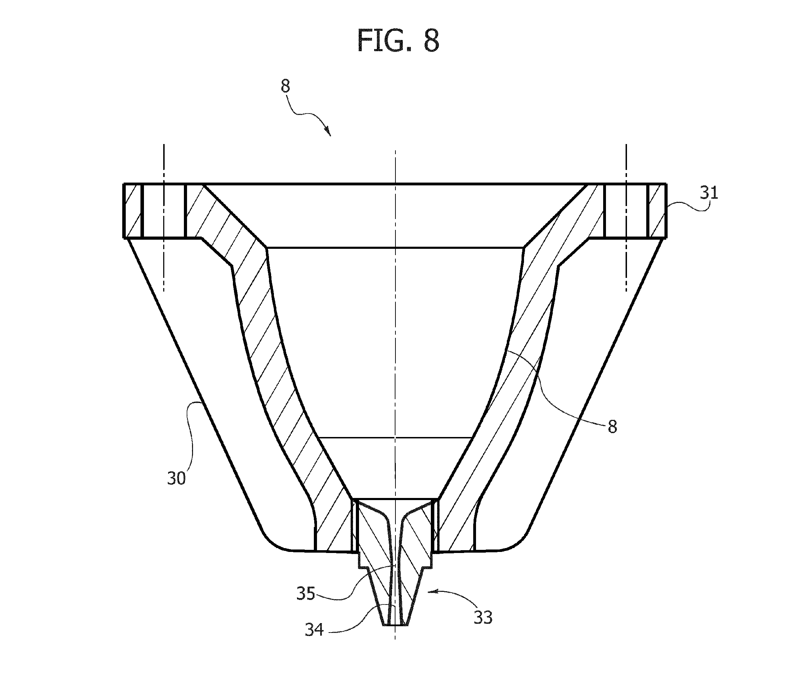

The diaphragm 8, represented in detail in Figures 7 and 8, consists of a generally conical body 30 provided at the top with a flange 31 for fixing it to the bottom end of the thermal chamber 7. The cavity of the diaphragm 8 is coated with a ceramic lining 32 and converges towards a bushing 33 made of hardened steel, which forms a convergent-divergent passage 34 to the wall of which is also applied a facing of ceramic material or hard metal 35.

At the opposite end, i.e., on the side of the flange 31, applied to the diaphragm 8 is a plate 36 formed with a complementary flange 37 and concentric rings of generally conical perforations 38, 39, 40, converging towards the diaphragm 8.

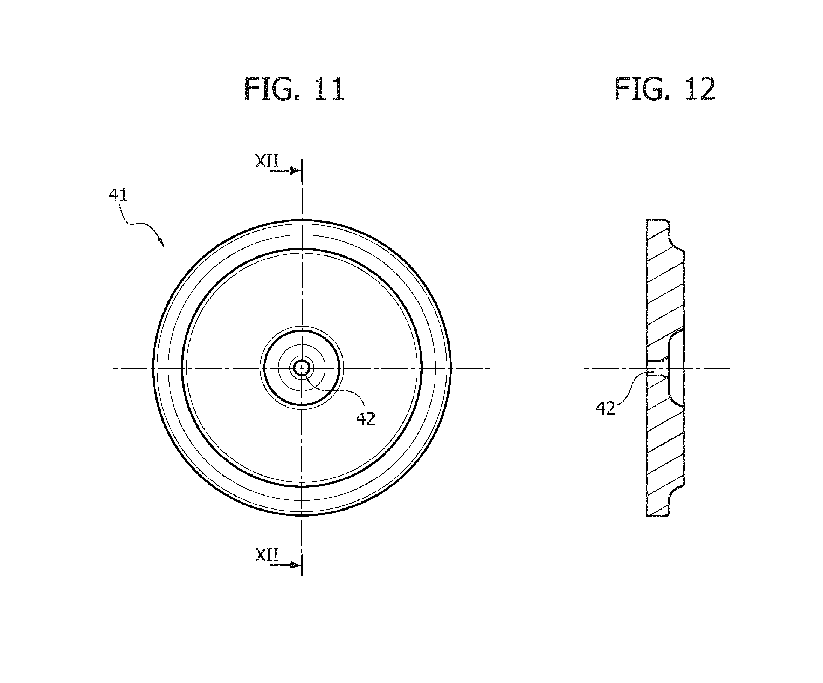

Figures 11 and 12 illustrate a cleaning disk 41 set underneath the bushing 33 and formed with a restricted central passage 42.

In the operation of the apparatus, the five components that are to form the mixture are supplied to the injector 6 in a dosed and controlled way according to volumetric parameters and times that vary according to whether the production is of single-wall or else multiwall or else mixed carbon nanotubes (CNTs).

The mixture produced in the mixing chamber 5 then passes into the thermal chamber 7, which, as has been said, is kept at negative pressure and heated at a temperature of between 1100°C and 1300°C. There is thus produced molecular disgregation of the hydrocarbons, with formation of single-wall or else multiwall carbon nanotubes (CNTs) according to the process parameters adopted. Under the effect of the catalyst, constituted by ferrocene, the carbon nanotubes interweave and, traversing the plate 36, form the carbon filament within the diaphragm 8. The carbon filament then traverses the bushing 33 and, after being cleaned from possible local over-depositions by the cleaning disk 41, is drawn away, for example, via a motor-driven winder 43 (Figure 2). The filament is finally stored as such or else resin spray-coated for subsequent use.

The method and the apparatus according to the invention enable production of carbon filament having a high degree of purity with relatively low production costs, thanks to the presence of a single thermal pass, and with emissions close to zero that result in an extremely reduced environmental impact.

In particular, the fluid components that concur in the production of the carbon nanotubes according to the invention lead to the following advantageous effects:
- the parts of hydrogen contained in the mixture, in addition to the function of vehicle, are directly functional, via combustion, for maintenance of the temperatures inside the mixing chamber; the percentage of self-sufficiency of the consumption levels in the thermal process has been experimentally calculated and is equal to 83% at thermal steady-state conditions in the chamber; this enables classification of the method as a "low environmental impact" one, with evident advantages also from the standpoint of the energy consumption in the process of conversion of the gaseous parts and the liquid parts;
- the emissions into the atmosphere are amply positive and with zero environmental impact: in fact, once the process is completed, the emissions into the atmosphere not only do not contain pollutant elements, but are even rich in oxygen and thus have environmental benefits for the soil surrounding the production plant;
- the step of conversion from CNTs to carbon filament can be performed via a process of driven electro-spinning, favoured by:
- simultaneous emissions at a low pressure of the gaseous components and at a high pressure of the liquid components in the mixing chamber;
- variable flow rates of the elements, during the thermal pass.

In fact, by varying the amount of the elements in the electro-spinning operation it is possible to obtain the following advantages:
- high efficiency of the process;
- achievement of single-wall and multiwall CNTs in a bivalent way by adjusting the flow rate of the mixture of gases in the conversion process;
- achievement of CNTs with high purity (even greater than 99%) and hence with very low percentages of defectiveness that excludes the need for additional processes and/or processes of further purification of the nanotubes produced.

Of course, the details of construction and the embodiments of the apparatus for implementation of the method may vary widely with respect to what has been described and illustrated herein, without thereby departing from the scope of the invention as defined in the ensuing claims.

## Claims

1. A method for producing carbon filament starting from carbon nanotubes, **characterized in that** it comprises the following steps:
- injecting in a controlled and dosed way three gaseous components, namely, hydrogen, carbon dioxide, and acetylene, and two liquid components, namely, ethanol and ferrocene, into a mixing chamber (5);
- introducing the mixture thus obtained into a thermal chamber in negative pressure (7), heating it to a temperature of between 1100°C and 1300°C to bring about molecular disgregation of the hydrocarbons present in the mixture and formation of the carbon nanotubes, which, once interwoven, form the carbon filament; and
- extracting and gathering the carbon filament at the outlet (8) of the thermal chamber (7).

2. The method according to Claim 1, **characterized in that** said gaseous and liquid components are injected in said mixing chamber (5) using a multiple injector (6).

3. The method according to Claim 1 or Claim 2, **characterized in that** said gaseous components are injected at a low pressure, and said liquid components are injected at a high pressure.

4. The method according to any one of the preceding claims, **characterized in that** the negative pressure in said thermal chamber (7) is of the order of 10⁻¹ torr.

5. An apparatus for producing carbon filaments starting from carbon nanotubes, **characterized in that** it comprises:
- a mixing chamber (5), operatively associated to which is a multiple injector (6);
- means for supplying three gaseous components, namely, hydrogen, carbon dioxide, and acetylene, and two liquid components, namely, ethanol and ferrocene, to said injector (6);
- a thermal chamber (7) connected to said mixing chamber (5);
- means for heating said thermal chamber (7) to a temperature of between 1100°C and 1300°C and for keeping it at negative pressure so as to cause molecular disgregation of the hydrocarbons of the mixture and formation of carbon nanotubes; and
- diaphragm means (8) connected to said thermal chamber (7) for the formation and extraction of the carbon filament.
